# EUROPEAN PATENT SPECIFICATION

(11) **EP 1 406 225 B1**
(45) Date of publication and mention of the grant of the patent: **20.03.2013**
(21) Application number: 03256010.4
(22) Date of filing: 24.09.2003
(51) Int. Cl.: G08C 19/28, H04N 5/445

(54) **Universal-type remote controller**
Universalfernbedienung
Télécommande universelle

(30) Priority: 04.10.2002 KR 2002060506
(43) Date of publication of application: 07.04.2004
(73) Proprietor: Samsung Electronics Co., Ltd., Suwon-si, Gyeonggi-do, 443-742 (KR)
(72) Inventor: Ha, Hoeseong, No. 422-1702 Gunyoung Apt., Paldal-gu Suwon-city Kyungki-do (KR)
(74) Representative: Walaski, Jan Filip

(56) References cited:
- US-A1- 2002 024 617
- US-B1- 6 262 780

## Description

The present invention relates to universal-type remote controller having a signal source selection user input means, mode selection user input means and multifunction user input means, the remote controller being responsive to: a signal from the signal source selection user input means to transmit a signal source selection signal for a display apparatus, a signal from the mode selection user input means to select a multifunction user input means operation to control signal mapping, and a signal from the multifunction user input means to transmit a control signal in dependence on the currently selected a multifunction user input means operation to control signal mapping.

As remote controls are widely used for the control of electronic equipment, the number of remote controls used in a home has increased. Therefore, there is difficulty in managing the remote controls. There is also inconvenience in that whenever a user wants to select and utilize other electronic equipment, the user must accordingly find the appropriate remote control. To solve this problem, universal remote controls that can control a plurality of apparatuses have been introduced.

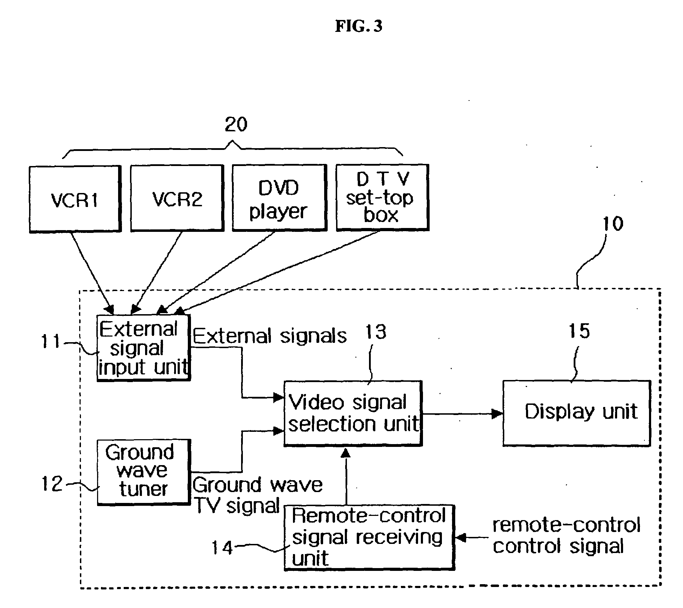

Figure 3 is a block diagram showing the configuration of a TV or other electronic appliance controlled by a universal remote control.

Referring to Figure 3, a system includes a TV 10 and external equipment 20. The external equipment 20 may include a VCR, a DVD player and a DTV set-top box. The TV 10 is used as the output apparatus for the external equipment 20. That is, all the video outputs from the VCR, the DVD player, the set-top box and the like are input into an external signal input unit 11 of the TV 10 and then fed, together with terrestrial TV signals received by a terrestrial TV tuner 12, to a video signal selection unit 13.

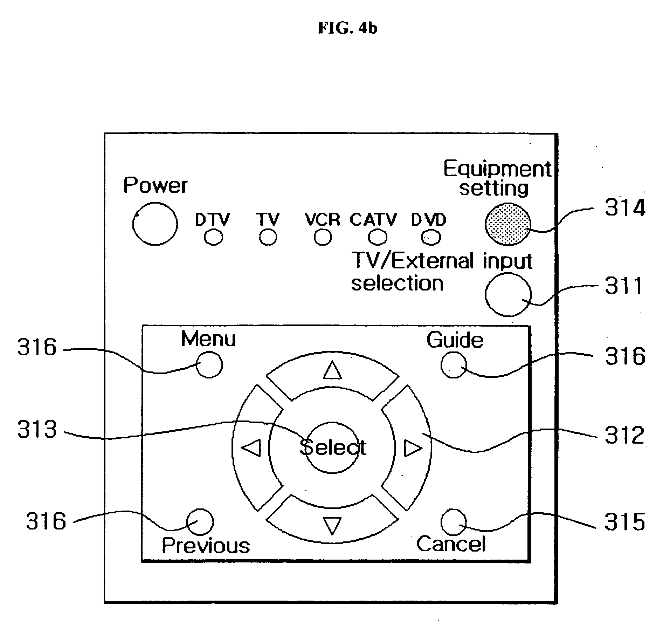

The user can operates TV/external input select button 311 of the universal remote control, shown in Figure 4b, so that the desired video signal is displayed by a display unit 15. A control signal corresponding to the TV/external input selection is transmitted through a remote-control signal receiving unit 14 to the video signal selection unit 13.

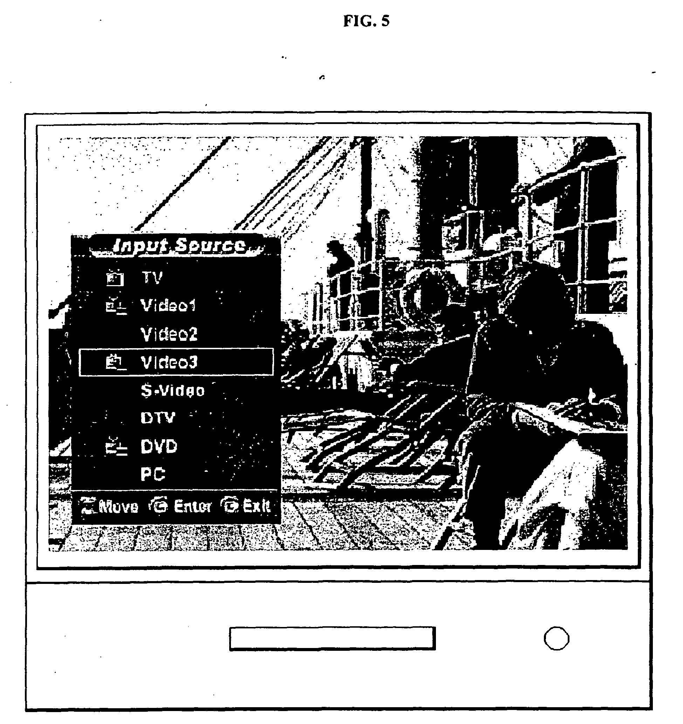

The conventional TV 10 employs a step through method in which the video signal to be output is changed whenever the user presses the TV/external input select button 311. However, there has recently been a tendency to change toward a menu method in which pressing of the TV/external input select button 311 causes a menu for the selection of an external input is displayed on the display unit 15 of the TV, as shown in Figure 5, and the user selects an external input from the menu by using direction buttons 312, a select button 313 and a cancel button 315.

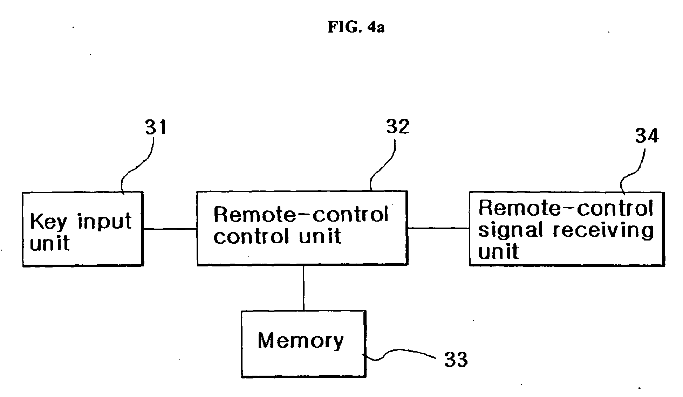

The conventional universal remote control shown in Figure 4a includes a key input unit 31 with a key matrix composed of a plurality of input buttons for controlling the external equipment 20 in addition to several input buttons shown in Figure 4b. These input buttons include common buttons used for a variety of equipment among the external equipment 20, for example the direction buttons 312, the select button 313, the cancel button 315 and the other buttons 316; individual buttons such as a play button and a stop button (not shown) for particular pieces of external equipment 20; and an equipment setting button 314 for setting the external equipment to be controlled by the universal remote control. In operation, the direction buttons 312, the select button 313 and the cancel button 315 are selected for movement toward, selection and cancellation of a desired menu item when a menu of the TV 10 or an external equipment 20 is displayed by the display unit 15 of the TV 10.

The conventional universal remote control stores key codes for various equipment in a memory 33 in order to control the different types of external equipment 20. According to a selected value of the equipment setting button 314 and a selected value of an input button selected from the key input unit 31, the remote-control control unit 32 transmits a key code for the selected input button to a remote-control signal transmitting unit 34. The selected value of the equipment setting button 314, i.e. an equipment mode of the remote control, is stored in the memory 33. Upon selection of the equipment setting button 314, the equipment mode of the remote control is changed into DTV, TV, VCR, CATV or DVD as shown in Figure 4b, and then stored. For example, if the selected value of the equipment setting button 314 is DVD, the remote-control control unit 32 generates key codes for controlling the DVD player according to the values of input buttons on the key input unit 31 that are pressed. Furthermore, the conventional universal remote control provides an additional individual button 311 for the selection of the external input into the TV 10, which is frequently utilized. If the TV/external input select button (hereinafter, referred to as "external input select button") 311 is pressed, the remote-control control unit 32 recognizes the selection as a kind of interrupt command and generates a key code for the TV 10 regardless of the selected value of the equipment setting button 314, i.e. the equipment mode of the remote control. However, key codes for the buttons, except the external input select button 311, are generated by referencing the equipment mode of the remote control. Therefore, when cursor movement is made or a certain external input is selected from the menu displayed by the display unit 15 of the TV 10 shown in Figure 5 by using the conventional universal remote control, a lot of cumbersome selection operations of the equipment setting button 314 occur.

A case will be discussed below, where the displayed video is changed to output video from the VCR, while output video from a DVD is being displayed by the display unit of the TV 10. After reproduction of the DVD is stopped, the menu for selection of the external inputs is displayed by the display unit 15 of the TV 10 by pressing the external input select button 311. Then, the equipment mode of the universal remote control is changed to TV mode using the equipment setting button 314 of the remote control. Subsequently, cursor movement across the menu is effected using the direction buttons 312 to select the VCR as the external input and the select button 313 is pressed. Now, the VCR is set as the external input of the TV 10 and the equipment mode of the remote control is changed to VCR mode by

As a result, in the case where the output video from the DVD displayed by the display unit of the TV 10 is intended to be changed to the output video from the VCR, the equipment setting button 314 must be selected at least twice. This is because the cursor movement and selection in the menu list can be made only in TV mode even though the menu list for selection of the external inputs into the TV 10 can be displayed in any mode of the universal remote control.

KR-A-1993-6709 discloses a method of controlling a universal remote control using an artificial intelligence key, wherein a menu of objects to be controlled is displayed on the screen of a TV when a user presses a menu key, a submenu is displayed when the user selects an object to be controlled from the displayed menu and the selected object to be controlled can be controlled when the user selects a desired control command from the displayed submenu.

US 6262780 discloses a channel selection remote control.

US 2002/0024617 A1 discloses a remote-controllable media device.

However, in the method of controlling the universal remote control in which desired external equipment can be controlled by selecting a submenu displayed on the screen of the TV, the external equipment must be connected to the TV through a network for control signals so that the control signals generated by the TV can be transmitted to the external equipment. Furthermore, the method requires: a network system, through which, when the user selects a submenu after display of the menu of objects to be controlled on the TV, the relevant external equipment recognizes the selection and transmits its own menu to the TV; or a two-way universal remote control capable of transmitting and receiving information and control signals to and from the external equipment, rather than a conventional one-way universal remote control for only transmitting the control signals to the TV or external equipment without exchanging information with the TV or external equipment.

Therefore, if the one-way remote control is used in a system which is composed of a TV and other electronic equipment and merely utilizes the TV as an output apparatus for video signals as shown in Figure 3, there is still inconvenience in that the user must operate the equipment setting button of the remote control whenever he/she changes the external inputs into the TV.

The present invention is conceived to solve the aforementioned problems. An object of the present invention is to provide a method of controlling a universal remote control by which the universal remote control can be used to select external inputs into a display apparatus such as a TV without changing equipment modes of the universal remote control many times.

According to an aspect of the present invention, there is provided a universal-type remote controller according to claim 1, and a method of controlling a universal remote control according to claim 11.

A remote controller according to the present invention is characterised in that the remote controller is responsive to a signal from the signal source selection user input means to generate subsequent control signals according to a multifunction user input means operation to control signal mapping for said display apparatus until a predetermined operation of the multifunction user input means.

Preferably, the remote controller is responsive to said predetermined operation to transmit control signals according to the multifunction user input means operation to control signal mapping extant when the preceding signal from the signal source selection user input means was generated.

Preferably, said mappings are implemented by look up tables stored in a memory.

The user input means may conveniently comprise push buttons.

Preferably, the remote controller is programmed with a plurality of multifunction user input means operation to control signal mappings and responsive to a signal from the user input means to associate a mapping with a respective mode.

A remote controller according to the present invention is particularly intended for use in video system also comprising a display apparatus and a signal source connected to the display apparatus for supplying video signals thereto.

Such a system may also include a further signal source connected to the display apparatus for supplying video signals thereto.

Preferably, the display apparatus includes user interface means for generating a signal source selection menu and responsive to control signals from the remote controller for navigation of said menu.

Preferably, the display apparatus is a television set.

Preferably, the or each signal source is an apparatus selected from a DVD player, a video cassette recorder and a set top box.

An embodiment of the present invention will now be described, by way of example, with reference to the accompanying drawings, in which:
Figure 1 is a block diagram of a universal remote control according to the present invention;
Figure 2 is a flowchart illustrating a method of operation of a universal remote control according to the present invention;
Figure 3 is a block diagram showing the system configuration of a conventional TV and other electronic appliances;
Figure 4a is a block diagram of a conventional universal remote control;
Figure 4b is a view showing a layout of some of the buttons of a conventional universal remote control; and
Figure 5 is a view showing a menu for selection of an external input displayed on a screen of a conventional TV.

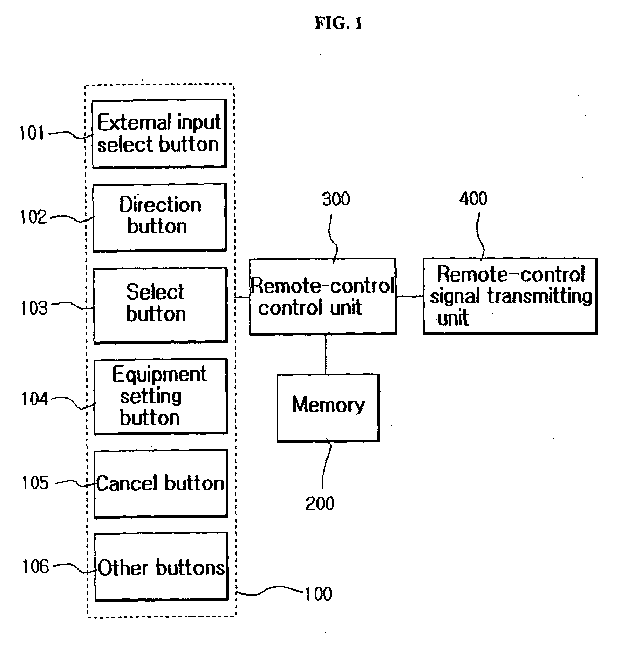

Referring to Figure 1, a universal remote control according to the present invention comprises a key input unit 100 having a plurality of input buttons, such as shown in Figure 4b, for controlling external equipment 20, a memory 200 in which are stored respective equipment key codes, equipment mode and information on the input buttons including the selection values of the input buttons pressed after the selection of an external input select button, a remote-control control unit 300 for generating key codes for the input buttons on the key input unit 100 by referencing the equipment key codes stored in the memory 200, and a remote-control signal transmitting unit 400 for performing an optical communication function.

The key input unit 100 includes the external input select button 101, direction buttons 102, a select button 103, an equipment setting button 104, a cancel button 105 and the other buttons 106. For a clear understanding of the present invention, the configuration of numeric input keys and general buttons for record/play/stop/rewind functions, and the like, are not shown in Figure 1. Since the configuration and functions of the input buttons of the key input unit 100 are identical with those of the key input unit 31 of a conventional universal remote control shown in Figure 4a, a detailed description thereof will be omitted.

The memory 200 is configured to store the equipment key codes for controlling different types of external equipment 20.

The remote-control control unit 300 causes the equipment mode to be stored in the memory 200 whenever the equipment setting button 104 of the key input unit 100 is selected. Alternatively, the control unit 300 causes the key codes for the selected input buttons to be transmitted to the remote-control signal transmitting unit 400 by referencing the equipment key codes according to the current equipment mode stored in the memory 200, when other key buttons of the key input unit 100 are selected. Furthermore, information on buttons to be subsequently selected is temporarily stored in the memory 200, when the external input select button 101 is selected. At this time, if the information on the selected input buttons is information on the direction buttons 102, the select button 103 or the cancel button 105 in relation to the selection of external inputs into the TV, the current equipment mode of the universal remote control is separately stored in the memory 200. Then, the current equipment mode of the universal remote control is changed to TV mode, and a relevant key code is generated and transmitted by referencing the information on the input buttons and a TV key code stored in the memory 200. If the stored information on the input buttons is information on input buttons other than the direction buttons 102, the select button 103 or the cancel button 105 in relation to the selection of the external inputs into the TV, the current equipment mode of the universal remote control is not changed and the relevant key code is generated and transmitted by referencing to the equipment key codes stored in the memory 200 according to the current equipment mode stored in the memory 200.

For reference, the memory 200 is composed of general-purpose storage devices such as DRAM, SRAM, EEPROM or flash memory. The equipment mode of the remote control and the information on the input buttons may be stored in an additional memory other than the memory 200 in which the equipment key codes are stored.

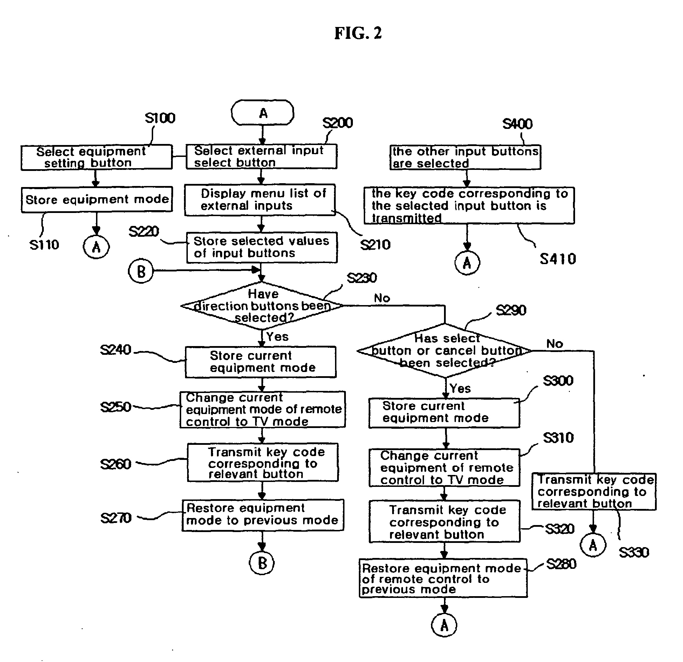

A method of controlling the universal remote control according to the present invention will now be described in detail with reference to the flowchart in Figure 2.

When the equipment setting button 104 is pressed (S100), the remote-control control unit 300 causes the selected equipment mode to be stored in the memory 200 (S110). Alternatively, when other input buttons are pressed (S400), the key code corresponding to the pressed input button is generated and transmitted by referencing the equipment key code according to the equipment mode stored in the memory 200 (S410).

If the external input select button 101 is pressed (S200), the remote-control control unit 300 recognizes the selection as a kind of interrupt command. This causes the key code for the TV 10 to be generated regardless of the equipment mode stored in the memory 200 and a menu of external inputs to be displayed by the display unit 15 of the TV 10 (S210).

Then, the selected values of the input buttons pressed after the pressing of the external input select button 101, i.e. the information on the input buttons, are stored in the memory 200 (S220), and it is determined whether the stored information on the input buttons is information on the direction buttons 102 (S230). If it is determined that a direction button 102 has been pressed, the remote-control control unit 300 causes the current equipment mode of the universal remote control to be separately stored in the memory 200 (S240) and then changed to TV mode (S250), and the key code corresponding to the stored information on the direction buttons to be generated and transmitted by referencing the TV code stored in the memory 200 (S260), since the direction buttons are buttons related to the selection of the external input into the TV. Furthermore, cursor movement is made over the external input selection menu displayed by the display unit 15 of the TV 10 in response to the transmitted key code.

Thereafter, the control unit 300 causes the current equipment mode to be restored to the equipment mode stored separately before the equipment change (S270), and waits for a button to be pressed in the state where the external input menu is displayed.

At step S230, where it is determined whether the direction buttons have been selected, if the stored information on the input buttons is not information on the a direction button 102, it is again determined whether the stored information is information on the select button 103 or the cancel button 105 (S290). If it is determined that the select button 103 or the cancel button 105 has been pressed, the remote-control control unit 300 causes the current equipment mode to be separately stored in the memory 200 (S300) and changed to TV mode (S310), and causes the key code corresponding to the stored information on the select or cancel button to be generated and transmitted by referencing the TV key code stored in the memory 200 so that the external input selection menu displayed by the display unit 15 of the TV 10 can be selected or cancelled.

Then, the equipment mode of the universal remote control is restored to the separately stored equipment mode from before its change (S280)

At step S290, where it is determined whether the stored information on the input buttons is information on the select button 103 or the cancel button 105, if it is determined whether other input buttons have been pressed, it can be considered that a user has no intention of selecting the external inputs. Thus, the control unit causes the key code corresponding to the stored information on the relevant input button to be generated and transmitted according to the current equipment mode of the universal remote control without changing the equipment mode of the universal remote control (S330).

Next, in the case where the display of video from a DVD is intended to be changed to display of video from a VCR, as described above in connection with the prior art, it will be described how to implement the method of controlling the universal remote control according to the present invention.

After reproduction of the DVD is first stopped, the external input selection menu is displayed on the screen of the TV 10 by pressing the external input select button 311 of the universal remote control. Then, without changing the equipment mode of the universal remote control, the cursor is moved over the menu using the direction buttons 312 of the universal remote control to select the VCR as the external input source and the select button 313 is then pressed. Thus, the external input into the TV 10 is set to the VCR, and the equipment mode of the remote control is changed to VCR mode using the equipment setting button 314 of the remote control. Subsequently, a VCR play button is pressed and the VCR starts playing back a video. In this method of controlling the universal remote control, change of the external inputs into the TV and reproduction of VCR can be made with only one change of the equipment mode of the universal remote control. Thus, it can be understood that the operation of the universal remote control can be made more simply as compared with the operation method in the prior art.

Although it has been described by way of example that a TV is used as the display apparatus, the present invention is not limited thereto. The present invention can be applied to various kinds of display apparatuses such as a monitor or a beam projector capable of connecting with external equipment and displaying images thereon.

According to the present invention constructed as such, even though a one-way remote control is used without using an expensive system composed of the display apparatus and external equipment which are mutually controllably connected with each other, or using a universal remote control with which two-way recognition with the equipment can be made, the external input equipment can be conveniently selected without need to press the equipment setting button of the remote control several times in a case where the user intends to select the external inputs into the display apparatus such as the TV.

## Claims

1. A universal-type remote control for controlling a display apparatus (10) and plurality of devices (20), the remote control comprising:
external input selection user input means (101) for selecting an output from one of the devices as an external input for the display apparatus;
mode selection user input means (104) for setting the remote control to a device mode that depends on the device that is to be controlled by the remote control; and
multifunction user input means (102, 103, 105, 106) for transmitting a control signal according to the currently selected mode;
**characterised in that**
in response to a signal from the external input selection user input means (101), the remote control is arranged:
for subsequent signals from first selected ones of the multifunction user input means (102, 103, 105) that relate to selection of external inputs into the display apparatus, to generate control signals according to a display apparatus mode irrespective of the currently selected mode; and
for subsequent signals from second selected ones of the multifunction user input means (106) that do not relate to selection of external inputs into the display apparatus, to generate control signals according to the currently selected mode.

2. A remote control according to claim 1, wherein generation of said control signals according to the currently selected mode is implemented by mapping signals from the multifunction user input means to control signals in look up tables stored in a memory (200).

3. A remote control according to claim 1 or 2, wherein the external input selection user input means, mode selection user input means and multifunction user input means comprise push buttons (311, 312, 313, 314, 315, 316).

4. A remote control according to any preceding claim, programmed with a plurality of control signal mapping operations, wherein the remote control is responsive to a signal from the multifunction user input means (102, 103, 105, 106) to associate a mapping operation with a respective mode.

5. A video system comprising a display apparatus (10), a device (20) connected to the display apparatus for supplying video signals thereto and a remote control according to any preceding claim, wherein the remote control comprises control signal mapping operations for the display apparatus (10) and the device (20).

6. A video system according to claim 5, including a further device (20) connected to the display apparatus (10) for supplying video signals thereto, wherein the remote control comprises control signal mapping operations for the further device (20).

7. A system according to claim 5 or 6, wherein the display apparatus (10) includes user interface means for generating an external input selection menu and responsive to control signals from the remote controller for navigation of said menu.

8. A system according to claim 5, 6 or 7, wherein the display apparatus (10) is a television set.

9. A system according to any one of claims 5 to 8, wherein the or each device (20) is an apparatus selected from a DVD player, a video cassette recorder and a set top box.

10. A method of controlling a universal remote control for remotely controlling a plurality of devices (20) including a display apparatus (10), comprising the steps of:
in response to a signal from an external input selection user input means (101) of the universal remote control, selecting an output from one of the devices as an external input for the display apparatus;
in response to a signal from a mode selection user input means (104) of the universal remote control, setting the universal remote control to a device mode that depends on the device that is to be controlled by the universal remote control; and
in response to a signal from the multifunction user input means (102, 103, 105, 106), transmitting a control signal according to the currently selected mode;
**characterised in that** the method further comprises the steps of:
in response to a signal from the external input selection user input means of the remote control, subsequently generating control signals according to a display apparatus mode irrespective of the currently selected mode, for signals from first selected ones of the multifunction user input means (102, 103, 105) that relate to selection of external inputs into the display apparatus, and
subsequently generating control signals according to the currently selected mode, for signals from second selected ones of the multifunction user input (106) means that do not relate to selection of external inputs into the display apparatus.

11. The method as claimed in claim 10, further comprising the steps of:
storing information on multifunction user input means to be subsequently selected when the external input selection user input means of the universal remote control is selected;
determining whether the stored information on the multifunction user input means is information on multifunction user input means related to selection of external inputs into the display apparatus;
changing a mode of the universal remote control to a display apparatus mode when the stored information on the multifunction user input means is the information on the multifunction user input means related to the selection of the external inputs into the display apparatus; and
transmitting control signals according to the stored information on the multifunction user input means and the changed mode of the universal remote control.

12. The method as claimed in claim 11, further comprising the steps of:
storing the unchanged mode of the universal remote control, which is the mode before its change, when the stored information on the multifunction user input means is the information on the multifunction user input means related to the selection of the external inputs into the display apparatus; and
restoring the mode of the universal remote control to the stored unchanged mode of the universal remote control, after the step of transmitting the control signals according to the stored information on the multifunction user input means and the changed mode of the universal remote control.

13. The method as claimed in claim 12, wherein the multifunction user input means related to the selection of the external inputs include at least one of a select button, a cancel button, and direction buttons.

14. The method as claimed in any one of claims 10 to 13, further comprising the step of:
transmitting control signals according to a current mode of the universal remote control and the stored information on the multifunction user input means when the stored information on the multifunction user input means is not the information on the multifunction user input means related to the selection of the external inputs into the display apparatus.

15. The method as claimed in any one of claims 10 to 13, further comprising the steps of:
displaying a menu list for selection of external inputs into the display apparatus when the external input selection user input means of the universal remote control is selected; and
performing cursor movement, selection or cancellation in the menu list for the selection of the external inputs into the display apparatus, in response to transmitted control signals according to the stored information on the multifunction user input means and the changed mode of the universal remote control.

## Patentansprüche

1. Fernbedienung des Universal-Typs zum Steuern einer Anzeigevorrichtung (10) und einer Vielzahl von Geräten (20), wobei die Fernbedienung Folgendes umfasst:
Benutzereingabemittel für die Auswahl externer Eingänge (101) zum Auswählen eines Ausgangs von einem der Geräte als einen externen Eingang für die Anzeigevorrichtung,
Modusauswahl-Benutzereingabemittel (104) zum Einstellen der Fernbedienung auf einen Gerätemodus, der von dem Gerät abhängt, das von der Fernbedienung gesteuert werden soll, und
Multifunktions-Benutzereingabemittel (102, 103, 105, 106) zum Senden eines Steuersignals gemäß dem aktuell gewählten Modus,
**dadurch gekennzeichnet, dass**
die Fernbedienung als Reaktion auf ein Signal von dem Benutzereingabemittel für die Auswahl externer Eingänge (101) so angeordnet ist:
dass nachfolgende Signale von ersten ausgewählten der Multifunktions-Benutzereingabemittel (102, 103, 105), die mit der Auswahl externer Eingänge in die Anzeigevorrichtung in Beziehung stehen, Steuersignale gemäß einem Anzeigevorrichtungsmodus ungeachtet des aktuell gewählten Modus erzeugen und
dass nachfolgende Signale von zweiten ausgewählten der Multifunktions-Benutzereingabemittel (106), die nicht mit der Auswahl externer Eingänge in die Anzeigevorrichtung in Beziehung stehen, Steuersignale gemäß dem aktuell gewählten Modus erzeugen.

2. Fernbedienung nach Anspruch 1, wobei die Erzeugung der genannten Steuersignale gemäß dem aktuell gewählten Modus durch Abbilden von Signalen von den Multifunktions-Benutzereingabemitteln auf Steuersignale in Lookup-Tabellen, die in einem Speicher (200) gespeichert werden, implementiert wird.

3. Fernbedienung nach Anspruch 1 oder 2, wobei das/die Benutzereingabemittel für die Auswahl externer Eingänge, Modusauswahl-Benutzereingabemittel und Multifunktions-Benutzereingabemittel Drucktasten (311, 312, 313, 314, 315, 316) umfassen.

4. Fernbedienung nach einem der vorhergehenden Ansprüche, in die eine Vielzahl von Steuersignalabbildungsvorgängen einprogrammiert ist, wobei die Fernbedienung auf ein Signal von den Multifunktions-Benutzereingabemitteln (102, 103, 105, 106) reagiert, um einen Abbildungsvorgang einem jeweiligen Modus zuzuordnen.

5. Videosystem, umfassend eine Anzeigevorrichtung (10), ein Gerät (20), das mit der Anzeigevorrichtung verbunden ist, um Videosignale an sie anzulegen, und eine Fernbedienung nach einem der vorhergehenden Ansprüche, wobei die Fernbedienung Steuersignalabbildungsvorgänge für die Anzeigevorrichtung (10) und das Gerät (20) aufweist.

6. Videosystem nach Anspruch 5, das ein weiteres Gerät (20) aufweist, das mit der Anzeigevorrichtung (10) verbunden ist, um Videosignale an sie anzulegen, wobei die Fernbedienung Steuersignalabbildungsvorgänge für das weitere Gerät (20) aufweist.

7. System nach Anspruch 5 oder 6, wobei die Anzeigevorrichtung (10) eine Bedieneroberflächeneinrichtung zum Erzeugen eines Menüs für die Auswahl externer Eingänge aufweist und auf Steuersignale von der Fernbedienung zur Navigation des genannten Menüs reagiert.

8. System nach Anspruch 5, 6 oder 7, wobei die Anzeigevorrichtung (10) ein Fernsehgerät ist.

9. System nach einem der Ansprüche 5 bis 8, wobei das oder jedes Gerät (20) eine Vorrichtung ist, die aus Folgenden ausgewählt ist: einem DVD-Player, einem Videokassettenrekorder und einer Set-Top-Box.

10. Verfahren zum Steuern einer Universal-Fernbedienung zum Fernsteuern einer Vielzahl von Geräten (20) einschließlich einer Anzeigevorrichtung (10), das die folgenden Schritte umfasst:
Auswählen eines Ausgangs von einem der Geräte als einen externen Eingang für die Anzeigevorrichtung als Reaktion auf ein Signal von einem Benutzereingabemittel für die Auswahl externer Eingänge (101) der Universal-Fernbedienung,
Einstellen der Universal-Fernbedienung auf einen Gerätemodus, der von dem Gerät abhängt, das von der Universal-Fernbedienung gesteuert werden soll, als Reaktion auf ein Signal von einem Modusauswahl-Benutzereingabemittel (104) der Universal-Fernbedienung und
Senden eines Steuersignals gemäß dem aktuell gewählten Modus als Reaktion auf ein Signal von den Multifunktions-Benutzereingabemitteln (102, 103, 105, 106),
**dadurch gekennzeichnet, dass** das Verfahren ferner die folgenden Schritte aufweist:
nachfolgendes Erzeugen von Steuersignalen gemäß einem Anzeigevorrichtungsmodus ungeachtet des aktuell gewählten Modus als Reaktion auf ein Signal von dem Benutzereingabemittel für die Auswahl externer Eingänge der Fernbedienung für Signale von ersten gewählten der Multifunktions-Benutzereingabemittel (102, 103, 105), die mit der Auswahl externer Eingänge in die Anzeigevorrichtung in Beziehung stehen, und
nachfolgendes Erzeugen von Steuersignalen gemäß dem aktuell gewählten Modus für Signale von zweiten gewählten der Multifunktions-Benutzereingabemittel (106), die nicht mit der Auswahl externer Eingänge in die Anzeigevorrichtung in Beziehung stehen.

11. Verfahren nach Anspruch 10, das ferner die folgenden Schritte aufweist:
Speichern von Informationen über Multifunktions-Benutzereingabemittel, die nachfolgend zu wählen sind, wenn die Benutzereingabemittel für die Auswahl externer Eingänge der Universal-Fernbedienung gewählt wird,
Ermitteln, ob die gespeicherten Information über die Multifunktions-Benutzereingabemittel Informationen über mit der Auswahl externer Eingänge in die Anzeigevorrichtung in Beziehung stehende Multifunktions-Benutzereingabemittel sind,
Wechseln eines Modus der Universal-Fernbedienung auf einen Anzeigevorrichtungsmodus, wenn die gespeicherten Informationen über die Multifunktions-Benutzereingabemittel die mit der Auswahl der externen Eingänge in die Anzeigevorrichtung in Beziehung stehenden Informationen über die Multifunktions-Benutzereingabemittel sind, und
Senden von Steuersignalen gemäß den gespeicherten Informationen über die Multifunktions-Benutzereingabemittel und den gewechselten Modus der Universal-Fernbedienung.

12. Verfahren nach Anspruch 11, das ferner die folgenden Schritte aufweist:
Speichern des ungewechselten Modus der Universal-Fernbedienung, welcher der Modus vor seinem Wechsel ist, wenn die gespeicherten Informationen über die Multifunktions-Benutzereingabemittel die mit der Auswahl der externen Eingänge in die Anzeigevorrichtung in Beziehung stehenden Informationen über die Multifunktions-Benutzereingabemittel sind, und
Rückstellen des Modus der Universal-Fernbedienung auf den gespeicherten ungewechselten Modus der Universal-Fernbedienung nach dem Schritt des Sendens der Steuersignale gemäß den gespeicherten Informationen über die Multifunktions-Benutzereingabemittel und den gewechselten Modus der Universal-Fernbedienung.

13. Verfahren nach Anspruch 12, wobei die mit der Auswahl der externen Eingänge in Beziehung stehenden Multifunktions-Benutzereingabemittel wenigstens eines der Folgenden aufweisen: eine Auswahltaste, eine Beenden-Taste und Richtungstasten.

14. Verfahren nach einem der Ansprüche 10 bis 13, das ferner die folgenden Schritte aufweist:
Senden von Steuersignalen gemäß einem aktuellen Modus der Universal-Fernbedienung und den gespeicherten Informationen über die Multifunktions-Benutzereingabemittel, wenn die gespeicherten Informationen über die Multifunktions-Benutzereingabemittel nicht die mit der Auswahl der externen Eingänge in die Anzeigevorrichtung in Beziehung stehenden Informationen über die Multifunktions-Benutzereingabemittel sind.

15. Verfahren nach einem der Ansprüche 10 bis 13, das ferner die folgenden Schritte aufweist:
Anzeigen einer Menüliste für die Auswahl von externen Eingängen in die Anzeigevorrichtung, wenn das Benutzereingabemittel für die Auswahl externer Eingänge der Universal-Fernbedienung gewählt wird, und
Durchführen von Cursor-Bewegung, Auswahl oder Beendigung in der Menüliste für die Auswahl der externen Eingänge in die Anzeigevorrichtung als Reaktion auf gesendete Steuersignale gemäß den gespeicherten Informationen über die Multifunktions-Benutzereingabemittel und den gewechselten Modus der Universal-Fernbedienung.

## Revendications

1. Télécommande de type universel pour piloter un appareil d'affichage (10) et une pluralité de dispositifs (20), la télécommande comprenant :
des moyens de saisie Utilisateur pour la sélection de l'entrée externe (101) pour sélectionner une sortie provenant de l'un des dispositifs en tant qu'entrée externe pour l'appareil d'affichage ;
des moyens de saisie Utilisateur pour la sélection du mode (104) destinés à régler la télécommande sur un mode de dispositif qui dépend du dispositif devant être piloté par la télécommande ; et
des moyens de saisie Utilisateur à fonctions multiples (102, 103, 105, 106) pour transmettre un signal de commande en conformité avec le mode actuellement sélectionné ;
**caractérisé en ce que**
en réaction à un signal provenant des moyens de saisie Utilisateur pour la sélection de l'entrée externe (101), la télécommande est agencée de façon à :
dans le cas de signaux ultérieurs émanant de premiers moyens sélectionnés parmi les moyens de saisie Utilisateur à fonctions multiples (102, 103, 105) qui se rapportent à une sélection d'entrées externes acheminées vers l'appareil d'affichage, générer des signaux de commande en conformité avec un mode de l'appareil d'affichage indépendamment du mode actuellement sélectionné ; et
dans le cas de signaux ultérieurs émanant de seconds moyens sélectionnés parmi les moyens de saisie Utilisateur à fonctions multiples (106) qui ne se rapportent pas à une sélection d'entrées externes acheminées vers l'appareil d'affichage, générer des signaux de commande en conformité avec le mode actuellement sélectionné.

2. Télécommande selon la revendication 1, la génération desdits signaux de commande en conformité avec le mode actuellement sélectionné étant mise en oeuvre grâce au mappage de signaux provenant des moyens de saisie Utilisateur à fonctions multiples afin de piloter des signaux de commande dans des tables de consultation stockées dans une mémoire (200).

3. Télécommande selon la revendication 1 ou 2, les moyens de saisie Utilisateur pour la sélection de l'entrée externe, les moyens de saisie Utilisateur pour la sélection du mode et les moyens de saisie Utilisateur à fonctions multiples comprenant des boutons-poussoirs (311, 312, 313, 314, 315, 316).

4. Télécommande selon l'une quelconque des revendications précédentes, programmée avec une pluralité d'opérations de mappage pour les signaux de commande, cas dans lequel la télécommande réagit à un signal provenant des moyens de saisie Utilisateur à fonctions multiples (102, 103, 105, 106) afin d'associer une opération de mappage à un mode respectif.

5. Système vidéo comprenant un appareil d'affichage (10), un dispositif (20) connecté à l'appareil d'affichage pour fournir des signaux vidéo à celui-ci, et une télécommande selon l'une quelconque des revendications précédentes, cas dans lequel la télécommande comprend des opérations de mappage pour les signaux de commande destinés à l'appareil d'affichage (10) et au dispositif (20).

6. Système vidéo selon la revendication 5, comprenant un dispositif supplémentaire (20) connecté à l'appareil d'affichage (10) pour fournir des signaux vidéo à celui-ci, cas dans lequel la télécommande comprend des opérations de mappage pour les signaux de commande destinés au dispositif supplémentaire (20).

7. Système selon la revendication 5 ou 6, l'appareil d'affichage (10) englobant des moyens d'interface Utilisateur pour générer un menu de sélection des entrées externes et réagissant à des signaux de commande provenant de la télécommande pour assurer la navigation dans ledit menu.

8. Système selon la revendication 5, 6 ou 7, l'appareil d'affichage (10) étant un téléviseur.

9. Système selon l'une quelconque des revendications 5 à 8, le dispositif ou chaque dispositif (20) étant un appareil sélectionné parmi les postes suivants, à savoir un lecteur DVD, un magnétoscope et un boîtier décodeur.

10. Procédé destiné à piloter une télécommande universelle pour piloter à distance une pluralité de dispositifs (20) incluant un appareil d'affichage (10), comprenant les étapes consistant à :
en réaction à un signal provenant d'un moyen de saisie Utilisateur pour la sélection de l'entrée externe (101) de la télécommande universelle, sélectionner une sortie provenant de l'un des dispositifs en tant qu'entrée externe pour l'appareil d'affichage ;
en réaction à un signal provenant d'un moyen de saisie Utilisateur pour la sélection du mode (104) de la télécommande universelle, régler la télécommande universelle sur un mode de dispositif qui dépend du dispositif devant être piloté par la télécommande universelle ; et
en réaction à un signal provenant des moyens de saisie Utilisateur à fonctions multiples (102, 103, 105, 106), transmettre un signal de commande en conformité avec le mode actuellement sélectionné ;
**caractérisé en ce que** le procédé comprend en outre les étapes consistant à :
en réaction à un signal provenant des moyens de saisie Utilisateur pour la sélection de l'entrée externe de la télécommande, générer ultérieurement des signaux de commande en conformité avec un mode de l'appareil d'affichage indépendamment du mode actuellement sélectionné, dans le cas de signaux émanant de premiers moyens sélectionnés parmi les moyens de saisie Utilisateur à fonctions multiples (102, 103, 105) qui se rapportent à une sélection d'entrées externes acheminées vers l'appareil d'affichage, et
générer ultérieurement des signaux de commande en conformité avec le mode actuellement sélectionné, dans le cas de signaux émanant de seconds moyens sélectionnés parmi les moyens de saisie Utilisateur à fonctions multiples (106) qui ne se rapportent pas à une sélection d'entrées externes acheminées vers l'appareil d'affichage.

11. Procédé selon la revendication 10, comprenant en outre les étapes consistant à :
stocker des informations sur des moyens de saisie Utilisateur à fonctions multiples destinées à être sélectionnées ultérieurement lorsque le moyen de saisie Utilisateur pour la sélection de l'entrée externe de la télécommande universelle est sélectionné ;
déterminer si les informations stockées sur les moyens de saisie Utilisateur à fonctions multiples sont, ou non, des informations sur les moyens de saisie Utilisateur à fonctions multiples qui se rapportent à une sélection d'entrées externes acheminées vers l'appareil d'affichage ;
modifier un mode de la télécommande universelle en un mode de l'appareil d'affichage lorsque les informations stockées sur les moyens de saisie Utilisateur à fonctions multiples correspondent aux informations sur les moyens de saisie Utilisateur à fonctions multiples qui se rapportent à la sélection des entrées externes acheminées vers l'appareil d'affichage ; et
transmettre des signaux de commande en conformité avec les informations stockées sur les moyens de saisie Utilisateur à fonctions multiples ainsi qu'avec le mode modifié de la télécommande universelle.

12. Procédé selon la revendication 11, comprenant en outre les étapes consistant à :
stocker le mode non modifié de la télécommande universelle, qui représente le mode avant sa modification, lorsque les informations stockées sur les moyens de saisie Utilisateur à fonctions multiples correspondent aux informations sur les moyens de saisie Utilisateur à fonctions multiples qui se rapportent à la sélection des entrées externes acheminées vers l'appareil d'affichage ; et
faire revenir le mode de la télécommande universelle vers le mode stocké non modifié de la télécommande universelle, après l'étape de transmission des signaux de commande en conformité avec les informations stockées sur les moyens de saisie Utilisateur à fonctions multiples ainsi qu'avec le mode modifié de la télécommande universelle.

13. Procédé selon la revendication 12, les moyens de saisie Utilisateur à fonctions multiples qui se rapportent à la sélection des entrées externes incluant au moins l'un des postes suivants, à savoir un bouton Sélection, un bouton Annulation et des boutons de navigation.

14. Procédé selon l'une quelconque des revendications 10 à 13, comprenant en outre l'étape consistant à :
transmettre des signaux de commande en conformité avec un mode actuel de la télécommande universelle et avec les informations stockées sur les moyens de saisie Utilisateur à fonctions multiples lorsque les informations stockées sur les moyens de saisie Utilisateur à fonctions multiples ne correspondent pas aux informations sur les moyens de saisie Utilisateur à fonctions multiples qui se rapportent à la sélection des entrées externes acheminées vers l'appareil d'affichage.

15. Procédé selon l'une quelconque des revendications 10 à 13, comprenant en outre les étapes consistant à :
afficher une liste de menu servant à sélectionner des entrées externes acheminées vers l'appareil d'affichage lorsque le moyen de saisie Utilisateur pour la sélection de l'entrée externe de la télécommande universelle est sélectionné ; et
effectuer un mouvement de curseur, une sélection ou une annulation dans la liste du menu pour sélectionner les entrées externes acheminées vers l'appareil d'affichage, en réaction à des signaux de commande ayant été transmis, en conformité avec les informations stockées sur les moyens de saisie Utilisateur à fonctions multiples ainsi qu'avec le mode modifié de la télécommande universelle.
